# EUROPEAN PATENT SPECIFICATION

(11) **EP 2 710 881 B1**
(45) Date of publication and mention of the grant of the patent: **16.07.2014**
(21) Application number: 13180455.1
(22) Date of filing: 14.08.2013
(51) Int. Cl.: A01F 29/01, A01F 29/04, B02C 18/14

(54) **Distributor machine**
Verteilermaschine
Distributeur

(30) Priority: 21.09.2012 GB 201217040
(43) Date of publication of application: 26.03.2014
(73) Proprietor: Kverneland A/S, 4355 Kvernaland (NO)
(72) Inventor: Laursen, Boje, 5792 Arslew (DK)
(74) Representative: Raynor, Simon Mark

(56) References cited:
- EP-A2- 0 970 600
- FR-A1- 2 874 792
- GB-A- 2 102 270
- GB-A- 2 487 424

## Description

The present invention relates to a distributor machine for shredding and distributing fibrous materials such as hay, straw, maize and grass silage, for use as animal fodder and litter products. In particular, but not exclusively, the invention relates to a distributor machine for distributing baled materials, in the form of round or square bales. It may also be used for shredding and distributing fibrous materials in bulk form, for example clamp silage. Such machines are commonly called "bale choppers". The invention also relates to a method of operating a distributor machine and a method of distributing fibrous materials.

US patent application US2003/0075629A1 describes a distributor machine of a known type having a chamber for receiving baled materials, a shredder drum or rotor for shredding the baled materials into small pieces and a blower for distributing the shredded materials through a swivel chute. The shredder drum comprises a cylindrical body that supports a set of circular discs, each disc being equipped with a plurality of cutting blades that extend radially from the disc. The discs of the shredder drum co-operate with a barrier in the form of a comb that is mounted adjacent to the drum and has a plurality of plate-like teeth that extend towards the discs. The ends of the teeth are located as close as possible to the periphery of the discs and in use the blades pass by on either side of the teeth to produce a cutting action. The barrier prevents large clumps of material being transferred into the blower chamber. In some embodiments, the barrier can move around the drum to adjust the output rate. Embodiments having two or three shredder drums are also disclosed.

In some distributor machines, the shredder drum and the blower are driven from a common drive input, for example a drive shaft from a tractor, via a distribution gearbox. The drum and the blower are therefore driven synchronously and when operation of the machine commences, the drum and the blower both start to rotate at the same time. One problem with this arrangement is that shredded material can be deposited by the shredder drum in the blower chamber before the blower reaches full operational speed, which can cause a blockage.

European patent application EP0968643A1 describes a distributor machine that addresses this problem. The blower fan and the shredder drum are driven from a distribution gearbox, power being transmitted directly to the blower by a drive shaft, whereas power is transmitted to the shredder drum by a drive belt that includes a clutch mechanism. The clutch mechanism operates by adjusting the belt tension to control whether or not drive is transmitted to the shredder drum. When starting the machine, the belt tension is reduced so that drive is not transmitted to the drum. This allows the blower to reach full operating speed before the shredder drum starts feeding material into the blower chamber and thus helps to prevent blockages. However, the clutch mechanism described in EP 0968643A1 is complex and adds to the cost of the distributor machine.

European patent application EP0970600B describes another distributor machine in which an electromagnetic clutch is used to disengage drive to the shredder drum until the blower reaches full operating speed.

UK patent application No. 2487424 describes a distributor machine for distributing fibrous materials, which comprises a chamber for receiving fibrous materials, a shredder device for shredding the fibrous materials, a barrier device associated with the shredder device for holding back or recirculating unshredded materials, and a blower device for receiving shredded materials through a feed gap and distributing the shredded material through a distributor device. The distributor machine also includes a blocking device (termed a "regulator device") that controls the feeding of shredded materials through the feed gap. The blocking device is moveable between a closed position in which the feed gap is closed and feeding of shredded material is obstructed, and an open position in which the feed gap is open and feeding of shredded material is unobstructed.

This machine provides a solution to the problem of blockage upon start-up by closing the blocking device to ensure that the blower device can reach the required operating speed before the feeding of shredded materials commences. It should be noted that although the blocking device is termed a "regulator device" it does not actually regulate the feed rate of shredded materials through the feed gap: it is only located in either a fully closed position or a fully open position.

A number of other problems can be encountered with the aforesaid machines. For example, in addition to the risk of blocking on start up, blocking can also occur during normal operation of the distributor machine. This tends to happen when the shredded material is fed to the blower at too high a rate. Some of the shredded material can then get trapped in the distributor chute and as more material accumulates behind the trapped material this leads to blocking of the chute and eventually to filling of the blower chamber and blocking of the blower fan.

Another problem with the prior art distributor machines is that they do not always provide a uniform flow rate of shredded material. In particular, we have found that as the quantity of fibrous material in the chamber falls, the flow rate of shredded material distributed by the machine also tends to fall. This can lead to an uneven distribution of shredded material, for example when the shredded material is being distributed in a barn for use as animal bedding or feed material.

When the distributor machine is used to distribute shredded material in a large barn this is often done by towing the machine behind a tractor as it drives from one end of the barn to the other. Therefore, providing that the flow rate of shredded material and the speed of the tractor are constant, the material should be distributed evenly. However, as mentioned above, the flow rate of material distributed by the distributor machine can fall as the quantity of fibrous material in the chamber falls. Also, if the tractor is not driven at a uniform speed, this can cause an uneven distribution of shredded material. It is largely a matter of guesswork how quickly the driver should drive the tractor: if he drives too quickly some fibrous material may be left in the chamber when he reaches the far end of the barn, whereas if he drives too slowly the material may be exhausted before he reaches the other end of the barn.

It is known that different types of fibrous material may require different operating parameters for an ideal distribution. These operating parameters may include, for example, the operating speeds of the material conveyor, the rotating shredder and the blower fan. It is also known to provide recommended settings for one or more of these parameters, which the operator selects according to the type of fibrous material. However, these recommended settings are only approximate values based on typical examples of the different types of material. In practice, the fibrous material to be shredded may vary considerably, for example in length, thickness, hardness, moisture content and so on. Therefore, the recommended settings may be less than ideal for the particular material being shredded. Furthermore, as prior art baling machines do not generally provide means for monitoring the operating parameters, the operator may be unable to tell whether the actual operating parameters match the recommended settings.

It is an object of the present invention to provide a distributor machine that mitigates one or more of these and/or other disadvantages, or that provides a useful alternative thereto.

According to one aspect of the present invention there is provided a distributor machine for distributing fibrous materials, comprising a chamber that receives fibrous materials, a rotating shredder device having a plurality of cutter elements that shred the fibrous materials, a barrier device comprising a plurality of barrier elements that cooperate with the cutter elements to shred the fibrous materials and to hold back or recirculate unshredded materials, a blower device that receives shredded materials from the shredder device through a feed gap and distributes the shredded materials through a distributor device, a regulator device comprising a plurality of regulator elements that are positioned between the cutter elements and are moveable relative to the shredder device to regulate the feeding of shredded materials through the feed gap, wherein said regulator device is moveable between a closed position in which the feed gap is blocked, an open position in which the feed gap is fully open, and a plurality of intermediate positions in which the feed gap is partially open, at least one sensor that senses an operating parameter of the distributor machine and a control device that controls operation of the machine according to the sensed operating parameter, wherein the control device controls the position of the regulator device so as to regulate the feeding of shredded materials through the feed gap. The invention allows operation of the distributor machine to be controlled actively according to the sensed operating parameter or parameters. This allows fully automatic control of the machine and ensures that the operating parameters are matched to the prevailing conditions without requiring manual input. Various problems associated with prior art distributor machines such as blocking can also be avoided.

The invention thus allows the feed rate of material through the feed gap to be controlled actively according to the sensed operating parameter or parameters. By providing active control of the feed rate many of the problems associated with the prior art distributor machines can be avoided. For example, if a risk of blocking is sensed, the flow rate of shredded materials can be reduced to prevent blocking. The regulator device can also be controlled to provide a desired flow rate, according to operational requirements.

Advantageously, the distributor machine includes a conveyor that delivers fibrous material from the chamber to the shredder device, wherein the control unit is configured to control the speed of the conveyor to control the rate at which fibrous material is delivered to the shredder device

Advantageously, said at least one operating parameter includes the flow rate of shredded materials through the distributor device. By sensing the flow rate of shredded materials through the distributor device, the control device may be able to sense when there is a risk of the machine becoming blocked with shredded material. In that case, it may be programmed to reduce the opening of the regulator device so as to reduce the feed rate of material through the feed gap. This will allow any accumulated material to clear, thus avoiding a blockage. Preferably, a sensor is provided in an output device, for example the distributor chute, to sense the flow rate of shredded materials through the output device.

Advantageously, said at least one operating parameter includes the speed, torque or power consumption of the blower device. Sensing an operating parameter of the blower device allows an increased risk of a blockage to be detected. This may be indicated for example by a reduction in the rotational speed of the blower device or an increase in the torque or the power consumption. If either of these situations is sensed, the opening of the regulator device may be reduced to reduce the feed rate of material through the feed gap, thereby avoiding the risk of a blockage.

Advantageously, said at least one operating parameter includes the speed, torque or power consumption of the shredder device. The sensed operating parameter of the shredder device may provide an indication of the rate at which shredded material is being fed through the feed gap. This value may be used to control the position of the regulator device in order to provide a uniform or predetermined flow rate. Alternatively, this operating parameter may be combined with the output flow rate parameter to detect with greater certainty the risk of a blockage. For example, if the feed rate through the feed gap exceeds the flow rate through the output device this may be indicative of an increased risk of blockage.

Advantageously, said at least one operating parameter includes the quantity of fibrous materials in the chamber. The quantity of fibrous material in the chamber may be detected for example from the weight of the material, using one or more load sensors within the chamber or in the chassis or suspension of the distributor machine, or by means of optical sensors within the chamber, or by any other suitable means. By detecting the quantity of fibrous material in the chamber the regulator device can be controlled so as to open further as the quantity of material falls, to ensure a constant feed rate.

Advantageously, said at least one operating parameter includes the speed, torque or power consumption of a conveyor device within the chamber. These operating parameters may be used to provide an indication of the feed rate of fibrous materials to the blower device.

Advantageously, said at least one operating parameter includes the speed or position of the distributor machine relative to the ground, or the travel path of the vehicle over the ground. By sensing the speed or position or path of the distributor machine, the feed rate of material can be controlled to provide a uniform distribution of shredded material. For example, if the travelling speed of the machine increases the regulator device can be opened further to increase the feed rate, so that the amount of material distributed per metre travelled stays constant. Conversely, if the travelling speed decreases, the regulator device can be adjusted to reduce the feed rate and provide a constant rate of distribution per metre travelled. If the path of the vehicle includes a curve, the feed rate can be adjusted to compensate for any change in the density of distribution caused by the change of direction. In addition, the machine can be programmed to distribute a predetermined quantity of shredded material per metre travelled, according to operational requirements or to ensure that the contents of the chamber are spread evenly through a barn.

Advantageously, the control device is configured to sense an operational condition in which there is a risk of blockage, and to adjust the position of the regulator device so as to reduce the risk of blockage. For example, the control device may be configured to sense the flow rate of shredded materials through an output device such as a distributor chute and to adjust the regulator device to reduce the feed rate of the shredded materials, allowing an accumulation of shredded material in the chute to clear. Alternatively, the feed rate of the shredded materials may be controlled by adjusting the speed of the conveyor or the shredded drum. The control device may be configured to sense the risk of blockage by comparing the output signals of two or more sensors, for example sensors measuring the flow rate through the distributor chute and the feed rate through the feed gap. Advantageously, the control device is configured to maintain a constant flow rate of shredded materials through the distributor device.

Advantageously, the control device is configured to maintain a uniform distribution of shredded materials.

When the regulator device is in a closed position, feeding of shredded materials to the blower is substantially prevented. This allows the blower to reach operating speed without the risk of blockage. When it has reached operating speed the regulator device can be opened to allow feeding of shredded materials to the blower. The arrangement is simple and effective and avoids the need for a clutch mechanism.

Advantageously, the regulator device includes a plurality of regulator elements that extend from a support element towards the shredder device. The regulator elements may for example be positioned between any outwardly-extending blades or cutters provided on the shredder drum to avoid contact therewith.

The support element is preferably pivotable about a pivot axis in order to move the regulator device between the closed position and the open position. This is a simple and effective mechanism that allows the position of the regulator device to be adjusted radially relative to the shredder drum.

Advantageously, the support element is located above the shredder device and the regulator elements extend downwards from the support element towards the shredder device. The support element may for example consist of a support bar that extends transversely across the width of the machine, and is mounted on pivot arms for rotation about a pivot axis.

When the regulator device is located in the closed position, free ends of the regulator elements are preferably located close to the shredder device but at a small clearance distance therefrom. The regulator elements thus substantially prevent shredded materials from being fed to the blower but without preventing rotation of the shredder drum.

When the regulator device is in the open position, free ends of the regulator elements are preferably raised above the shredder device to avoid obstructing the feed gap.

The barrier device preferably includes a plurality of barrier elements that extend radially towards the shredder device, the regulator elements being located between the barrier elements. The barrier device may for example be in the form of a comb having a plurality of spaced barrier plates, the regulator elements being located between the barrier plates.

When the regulator device is in the open position, the regulator elements are preferably recessed behind the barrier elements to avoid contact with fibrous materials in the chamber, so that they do not obstruct movement either of the fibrous materials towards the shredder drum, or of any large clumps of unshredded material that are returned by the barrier device to the chamber for further processing.

When the regulator device is in the closed position, the regulator elements are preferably supported by a crossbar located above the shredder device. This provides additional support for the regulator elements and helps them to withstand the load exerted by the fibrous materials in the chamber.

The chamber of the distributor machine is preferably constructed and arranged to receive the fibrous materials as one or more bales.

According to another aspect of the present invention there is provided a method of operating a distributor machine according to any one of the preceding statements of invention, including driving the shredder device and the blower device to initiate operation thereof, moving the regulator device to the open position to allow feeding of shredded material to the blower device, sensing at least one operating parameter of the distributor machine and controlling operation of the machine according to the at least one sensed operating parameter, wherein controlling operation of the machine includes controlling the position of the regulator device so as to regulate the feeding of shredded materials through the feed gap.

Advantageously, the distributor machine includes a conveyor that delivers fibrous material from the chamber to the shredder device, the method including controlling the speed of the conveyor to control the rate at which fibrous material is delivered to the shredder device.

Advantageously, the method comprises loading the fibrous materials into a distributor machine having a chamber for fibrous materials, a shredder device, a barrier device associated with the shredder device, a blower device and an adjustable regulator device, actuating the blower device and the shredder device, and opening the regulator device to allow shredded materials to be fed to the blower device for distribution.

Advantageously, the method comprises controlling the position of the regulator device so as to regulate the feeding of shredded materials through the feed gap according to the at least one sensed operating parameter.

Advantageously, the method comprises sensing the flow rate of shredded materials through the distributor device.

Advantageously, the method comprises sensing the speed, torque or power consumption of the blower device.

Advantageously, the method comprises sensing the speed, torque or power consumption of the shredder device.

Advantageously, the method comprises sensing the quantity of fibrous materials in the chamber.

Advantageously, the method comprises sensing the speed, torque or power consumption of a conveyor device within the chamber.

Advantageously, the method comprises sensing the speed or position of the distributor machine relative to the ground, or the travel path of the distributor over the ground.

Advantageously, the method comprises sensing an operational condition in which there is a risk of blockage, and adjusting the position of the regulator device so as to reduce the risk of blockage.

Preferably, the method includes locating the regulator device in the closed position, driving the shredder device and the blower device to initiate operation thereof, waiting for the blower device to reach a predetermined operating speed, and then moving the regulator device to the open position to allow feeding of shredded material to the blower device.

At the end of an operating cycle, the regulator device is preferably closed before halting operation of the blower device to prevent a build-up of shredded material in the blower device.

The fibrous materials are preferably loaded into the chamber as one or more bales.

An embodiment of the invention will now be described, by way of example, with reference to the accompanying drawings in which:
Figure 1 is a side view of the distributor machine, with part of the housing cut away to reveal internal parts of the machine;
Figure 2 is an isometric view showing internal components of the distributor machine;
Figure 3 is a side view showing the internal components of the distributor machine, with a feed regulator in a closed configuration;
Figure 4 is a side view showing internal components of the distributor machine with the feed regulator in an open configuration, and
Figure 5 is a partially sectional side view of the distributor machine, showing schematically parts of a control system for the machine.

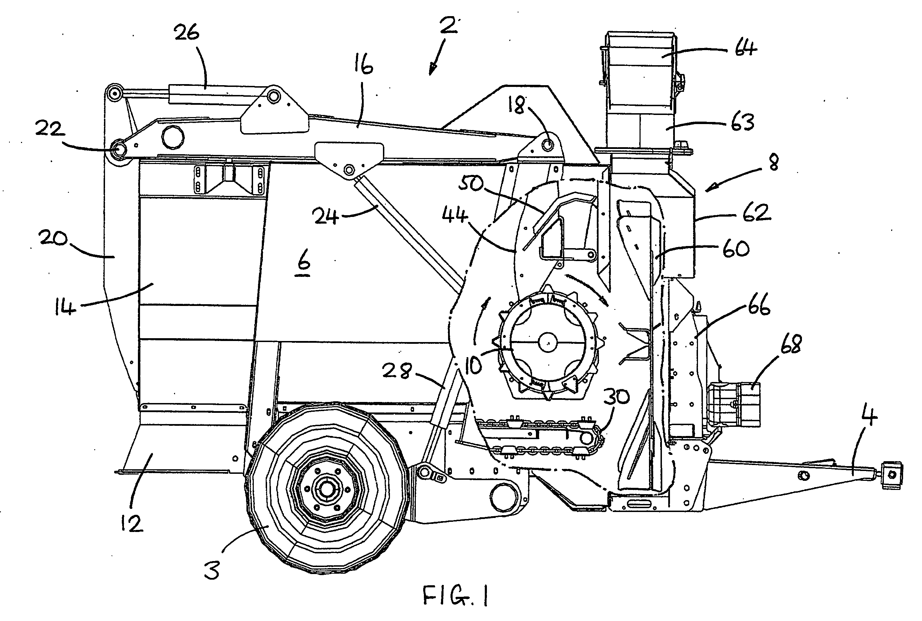

As shown in Figure 1 the distributor machine comprises a wheeled vehicle 2 having a pair of support wheels 3 and a tow bar 4 that allows it to be towed behind a tractor. The rear part of the vehicle 2 comprises a bale chamber 6 for receiving one or more bales of fibrous material such as hay, straw, maize or grass silage, and the front part comprises a blower 8 for distributing shredded materials. A shredder drum 10 is located between the bale chamber 6 and the blower 8. In use, the shredder drum 10 unravels and shreds the fibrous materials located in the bale chamber 6 and feeds the shredded material into the blower 8 for distribution. The shredded material may be used for example as fodder or litter for farm animals.

In more detail, the bale chamber 6 consists of a closed compartment having a base 12 and two side walls 14. In the example shown in the drawings the distributor machine includes a loading boom 16, is attached by a pivot 18 to the upper part of the bale chamber 6 and a rear door 20 is attached to a door pivot 22 at the rear end of the loading boom 16. The loading boom 16 and the rear door 20 may be opened by hydraulic rams 24, 26 to allow access to the interior of the bale chamber 6. The bale chamber 6 may also be lowered to the ground by actuating a third ram 28, to allow for easy loading of bales. This loading mechanism is optional and may be omitted.

Located within the base 12 of the bale chamber 6 is a conveyor 30 for feeding bales within the bale chamber 6 towards the shredder drum 10. The conveyor 30 may for example consist of a set of parallel conveyor bars 32 linked by a pair of endless drive chains 34.

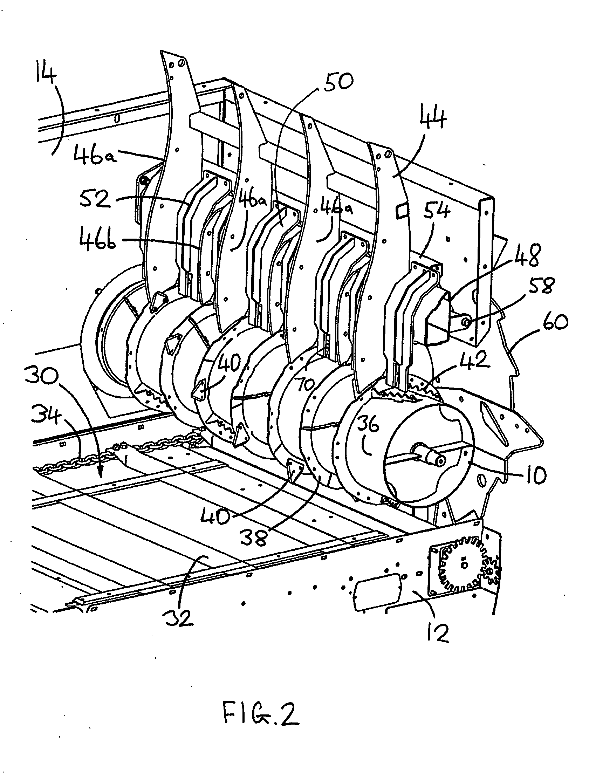

The shredder drum 10, which is shown most clearly in Figure 2, includes a cylindrical body 36 on which are mounted a set of cylindrical discs 38, the discs being spaced along the length of the drum. Each disc 38 supports a set of blades 40, which extend outwards from the circumference of the disc and are set at an acute angle to the plane of the disc 38. In this embodiment, the blades 40 are set alternately on opposite sides of the disc 38. Sets of gripper teeth 42 are attached to the cylindrical surface of the drum 10 between the discs 38.

A barrier 44 in the form of a comb is mounted in a fixed position above the shredder drum 10. The barrier 44 comprises a set of barrier plates 46a, 46b wherein each plate 46a, 46b is located above and cooperates with one of the discs 38. The lower end of each barrier plate 46a, 46b is located close to the circumference of the associated disc so that the blades 40 mounted on the disc pass on either side of the barrier plate. The barrier 44 thus supports the baled material as it is chopped by the blades 40 with a scissor-like action. The barrier 44 also prevents large clumps of uncut material from passing through a feed gap 47 into the blower 8.

In this embodiment there are two types of barrier plate: major barrier plates 46a that extend upwards towards the top of the bale chamber 6 and smaller minor barrier plates 46b. The major barrier plates 46a serve as deflectors to deflect large clumps of bale material back into the bale chamber 6 for further processing. The minor barrier plates 46b only serve to support the bale material as it is being chopped. The chopped material is fed by the blades 40 and the gripper teeth 42 to the blower 8 through the feed gap 47, which is located between the top of the shredder drum 10 and a crossbar 48 that is mounted above the drum.

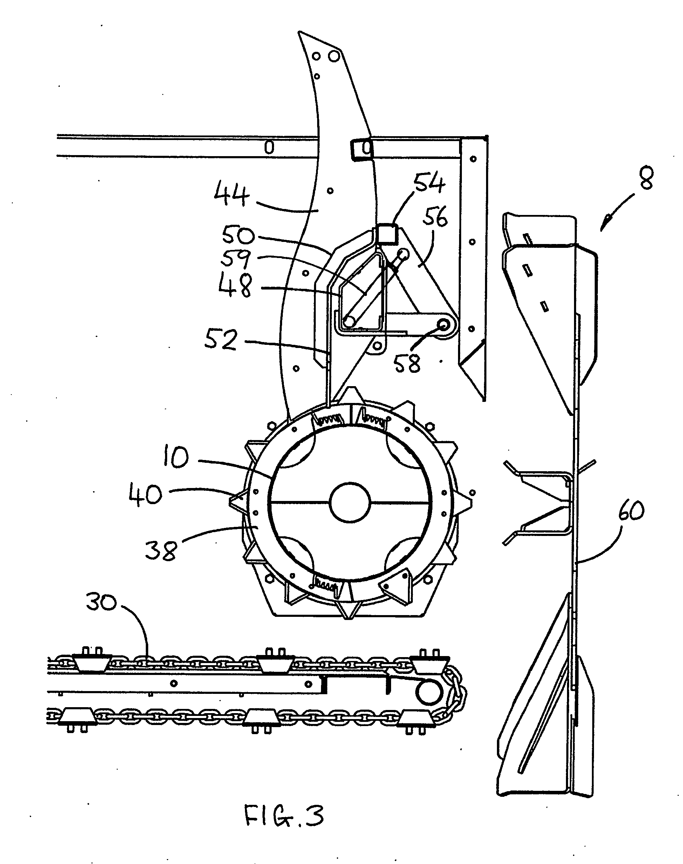

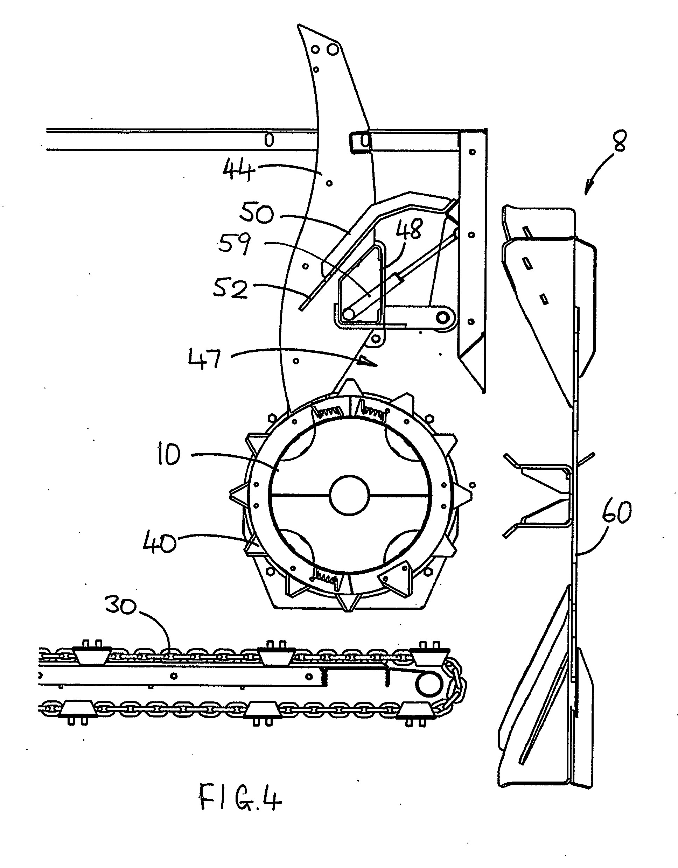

Also mounted above the shredder drum 10 is a feed regulator 50. The feed regulator 50 includes a set of curved regulator plates 52 that are attached at their upper ends to a support element comprising for example a support bar 54 and extend downwards between the barrier plates 46a, 46b towards the shredder drum 10. The support bar 54 is attached by pivot arms 56 to a pivot joint 58, allowing the feed regulator 50 to pivot between a closed position shown in Figures 2 and 3 in which the feed gap 47 is fully closed and an open position shown in Figures 1 and 4 in which the feed gap 47 is fully open. The feed regulator 50 can also be located in a plurality of intermediate positions in which the feed gap 47 is open to a greater or lesser extent. An actuator 59 for controlling the position of the feed regulator 50 is connected to the crossbar 48 and the pivot arm 56. The support bar 54 extends transversely across the machine, above and parallel to the rotational axis of the shredder drum 10. Preferably, the support bar 54 is displaced slightly from axis of the shredder drum 10 in the direction of the blower 8.

When the feed regulator 50 is in the closed position the lower ends of the regulator plates 52 are located close to the cylindrical surface of the shredder drum 10 so that the plates block the feed gap 47 between the drum 10 and the crossbar 48, while still leaving a small clearance relative to the blades 40 and the gripper teeth 42 to allow for rotation of the drum 10. This substantially prevents chopped material from being transferred through the feed gap 47 to the ejection blower 8, or at least reduces it to a minimum amount.

When the feed regulator 50 is in the fully open position the regulator plates 52 are raised away from the shredder drum 10 allowing chopped material to be transferred through the feed gap 47 to the ejection blower 8. In this open position the free ends of the regulator plates 52 are recessed behind the bale contacting surfaces of the major barrier plates 46a so that they do not come into contact with the bale surface.

When the feed regulator 50 is in an intermediate position the regulator plates 52 are raised partially away from the shredder drum 10 allowing chopped material to be transferred through the feed gap 47 to the ejection blower 8. The size of the feed gap 47 and the rate at which material is fed through the feed gap 47 depend on the position of the regulator device 50. The feed rate of material can thus be regulated by adjusting the intermediate position of the feed regulator 50.

Movement of the feed regulator 50 between the closed, intermediate and open positions may be driven by any suitable actuator 59, for example by a hydraulic ram, an electric actuator, or through a gear driven by an electric motor.

The ejection blower 8 includes a large blower fan 60 that is mounted in a blower housing 62 having a tangential outlet conduit 63 that is connected to a swivelling distribution chute 64 located in the upper part of the housing. As shredded bale material is fed into the blower 8 by the shredder drum 10, the rotating fan 60 creates a powerful airflow that entrains the shredded material and ejects it through the swivel chute 64. The blower fan 60 also acts as a flywheel and carries a large momentum during operation of the distributor machine.

The blower fan 60 and the shredder drum 10 are driven from a distribution gearbox 66 having a drive input 68 for connection (for example via a drive shaft) to the drive output of a tractor or other machine, and two drive outputs (not shown) that provide drive to the blower fan 60 and the shredder drum 10. Drive is transmitted continuously to both outputs so that the blower fan 60 and the shredder drum 10 rotate continuously during operation of the distributor machine.

In the embodiment shown in the drawings, each regulator plate 52 of the feed regulator 50 has a slot 70 at its free end. This slot 70 is needed only if the shredder drum 10 has extra sets of discs 38 and blades 40. If additional discs and blades are not provided (as in the embodiment shown in the drawings), the slots 70 may be omitted.

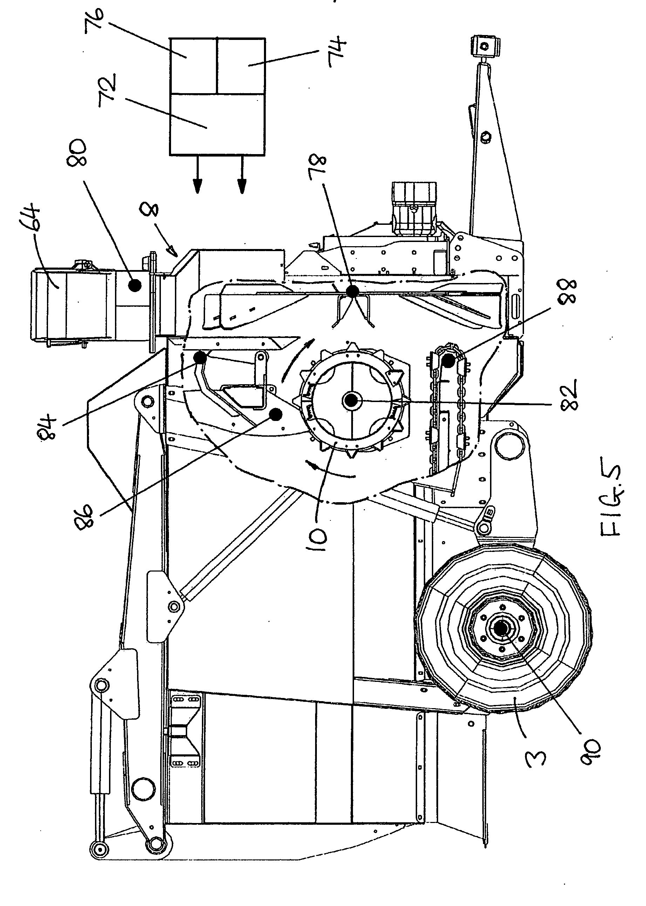

Operation of the distributor machine is controlled by a control system, the major components of which are illustrated schematically in Fig. 5. The control system includes a control unit 72, for example an electronic computer that includes a memory unit 74 and an operator interface 76, for example a touch screen or keypad, through which a human operator can control operation of the system. The control unit 72 is also connected to one or more sensors for sensing various operating parameters of the distributor machine. These sensors may include, for example, a fan sensor 78, an output sensor 80, a shredder drum sensor 82, a feed regulator sensor 84, a barrier sensor 86, a conveyor sensor 88 and a travelling speed sensor 90. Each of these sensors 78-90 may be configured to sense any suitable operating parameter associated with operation of the machine, including RPM, torque, speed, position, angle, hydraulic oil flow or pressure, load, pressure etc.

For example, the flywheel sensor 78 and the shredder drum sensor 82 may each be configured to sense the RPM, torque, hydraulic oil flow or oil pressure of the fan 60 and the shredder drum 10 respectively. The feed regulator sensor 84 and the barrier sensor 86 may be configured to sense the force exerted by the material in the bale chamber 6 on the feed regulator 50 and the barrier 44 respectively. The output sensor 80 may be associated with the distribution chute 64 and configured to sense the rate of flow of shredded material through the chute 64 and/or the quantity of material within the chute. It may for example include a mechanical force sensor that senses the pressure within the chute 80 and/or an optical or acoustic system that senses the density of material in the chute and/or the speed of material flowing through the chute 64. The conveyor sensor 88 may be configured to sense the drive speed of the conveyor 30 and/or the weight of fibrous material within the bale chamber 6. The travelling speed sensor 90 may be configured to sense the speed at which the distributor machine is travelling over the ground and may be associated with a support wheel 3 or a wheel of a towing tractor.

The control system may include any combination of one or more of the aforesaid sensors. The selected sensors are connected to the control unit 72 and transmit to the control unit 72 signals relating to the selected operating parameters of the distributor machine. The control unit 72 also receives operator signals received via the user interface 76 and data from the memory 74. According to the values of these input signals and operating algorithms stored in the memory 74, the control unit 72 generates output signals that control operation of the distributor machine. These output signals may for example control the rotational speeds of the shredder drum 10 and/or the blower fan 60, the feed rate of the conveyor 30 and/or the position of the regulator device 50.

In operation, bales are loaded into the bale chamber 6 and fed towards the shredder drum 10 by the conveyor 30. The feed regulator 50 is initially in a closed position as shown in figures 2 and 3 to prevent material passing through the feed gap 47 into the blower chamber 62. Drive is delivered to the blower fan 60 and the shredder drum 10 from the distributor gearbox 66, causing to rotate. The feed regulator 50 is held in the closed position until the blower fan 60 has reached operating speed. This prevents chopped bale material being fed into the blower chamber 62, where it could block rotation of the fan 60.

Once the blower fan 60 has reached operating speed, the feed regulator 50 is raised to either the fully open position as shown in figures 1 and 4 or to a partially open intermediate position, allowing shredded material to pass through the feed gap 47 into the blower chamber 62, from where it is blown by the fan 60 through the outlet conduit 63 and the chute 64. Rotation of the shredder drum 10 chops the bale material into small pieces and feeds this chopped material into the blower chamber 62 as the bale advances. This continues until the bale has been entirely dispersed or a sufficient quantity of shredded material has been distributed. The feed regulator 50 is then returned to the closed position before halting operation of the blower fan 60, to ensure that there is no build-up of shredded material in the blower chamber 62.

During operation, the position of the feed regulator 50 may be adjusted or various other operating parameters may be varied according to signals received from the control unit 72. Various operating modes will now be described.

### Analysis of the flow rate in the outlet of the chute to control the regulator device

If the chute is approaching a blocked situation, the quantity of shredded material in the chute will increase and the flow speed of materials through the chute will decrease. When this situation is sensed by the chute sensor 80 the control unit 72 sends a signal to the actuator 59 to move the regulator device 50 to either a less open position or a fully closed position. This either stops or reduces the rate at which fibrous material is delivered by the shredder drum 10 into the blower 8. This provides an opportunity for the excess quantity of shredded material to be cleared from the chute by the flowing air, thereby reducing the risk of a full blockage. Once the quantity of shredded material in the chute has been reduced and/or the flow speed of materials through the chute 63 has increased, the regulator device 50 can be moved to a more open position to increase the rate at which fibrous material is delivered by the shredder drum 10 to the blower 8.

### Analysis of the flow rate in the outlet of the chute using a camera

If the chute is approaching a blocked situation, the quantity of shredded material in the chute will increase. This can be detected using a camera for the chute sensor 80. When this situation is sensed the control unit 72 sends a signal to the actuator 59 to move the regulator device 50 to either a less open position or a fully closed position. This either reduces or stops the delivery of fibrous material into the blower 8 and provides an opportunity for the excess quantity of shredded material to be cleared from the chute, as described above.

### Analysis of the flow rate in the chute to control the conveyor

If the chute is approaching a blocked situation, the quantity of shredded material in the chute will increase and the flow speed of materials through the chute will decrease. When this situation is sensed by the chute sensor 80 the control unit 72 sends a signal to the drive motor for the conveyor 30 in the bale chamber 6, to reduce the speed of the conveyor 30 or bring it to a stop, so as to halt or reduce the rate at which fibrous material is delivered from the bale chamber 6 to the shredder drum 10. This can be combined with moving the regulator device 50 to either a less open position or a fully closed position. This provides an opportunity for the excess quantity of shredded material to be cleared from the chute, thereby reducing the risk of a full blockage. Once the quantity of shredded material in the chute has been reduced and/or the flow speed of materials through the chute has increased, the speed of the conveyor 30 can be increased to increase the rate at which fibrous material is delivered from the bale chamber 6 to the shredder drum 10.

### Analysis of the speed of the fan

The rotational speed or rpm of the fan 60 can be monitored using a fan sensor 78. This can be used to sense, for example, the possibility of a blockage in the outlet chute 63. If the rotational speed of the fan starts to fall, indicating a possible blockage, the control unit 72 sends a signal to the actuator 59 to move the regulator device 50 to either a less open position or a fully closed position. This either halts or reduces the rate at which fibrous material is delivered by the shredder drum 10 into the blower 8. Once the speed of the fan has returned to the required value the regulator device 50 can be moved to a more open position to increase the rate at which fibrous material is delivered to the blower 8.

### Analysis of the speed of the shredder drum

The rotational speed or rpm of the shredder drum 10 can be monitored using a drum sensor 82. If the rotational speed falls below a predetermined minimum value the control unit 72 may be programmed to send a signal to the actuator 59 to move the regulator device 50 to a more open position, allowing the drum 10 to rotate more easily. Once the speed of the drum has returned to the required value the regulator device 50 can be returned to a more closed position. If the rotational speed of the shredder drum 10 continues to fall after the regulator device has moved to a fully open position, the control unit 72 may be programmed to halt operation of the conveyor 30 and/or the shredder drum 10, to prevent possible damage to the machine. The reason for the fall in speed can then be investigated and corrected.

### Analysis of the pressure on the shredder drum

The pressure exerted on the shredder drum 10 by the materials in the bale chamber 6 can be monitored by a drum sensor 82. If the pressure increases above a predetermined level the control unit 72 sends a signal to the conveyor 30 to reduce the speed at which the bale materials are delivered to the shredder drum 10. This can be combined with moving the regulator device 50 to either a less open position or a fully closed position.

### Analysis of the pressure on the barrier device

The pressure exerted on the barrier device 44 by the materials in the bale chamber 6 can be monitored by a barrier sensor 86. If the pressure increases above a predetermined level the control unit 72 sends a signal to the conveyor 30 to reduce the speed at which the bale materials are delivered to the shredder drum 10. This can be combined with moving the regulator device 50 to either a less open position or a fully closed position.

### Analysis of the speed of the conveyor

The position of the regulator device 50 can be controlled so that the size of the feed gap 47 between the regulator device 50 and the shredder drum 10 is related to the speed of the floor conveyor 30, as sensed by a conveyor sensor 88. The relationship between the size of the feed gap 47 and the speed of the floor conveyor 30 can optionally be adjusted according to the type of fibrous material in the bale chamber 6.

### Analysis of the load of material in the bale chamber

The load or weight of fibrous material in the bale chamber 6 can be monitored by a conveyor sensor 88, and the normal working position of the regulator device 50 can be set accordingly. When the weight of material remaining in the bale chamber falls below a set value the regulator device 50 can be moved to a more open position in order to maintain a constant flow rate of shredded material through the outlet chute 63. The rate of loss of weight within the bale chamber 6 can also be monitored and the regulator device 50 can be adjusted to ensure that the material in the bale chamber is used up at a preferred rate.

### Analysis of the travel speed or path of the tractor or the distributor machine

The travel speed of the distributor machine over the ground can be monitored by the wheel sensor 90 or a speed sensor on the tractor. The control unit 72 may be programmed to adjust the regulator device 50 in order to maintain a flow rate of shredded material through the output chute 63 that is proportional to the travel speed in order to provide a uniform distribution of the shredded materials on the ground. Alternatively or in addition the path of the distributor machine over the ground can be monitored, for example using location sensors. The control unit 72 may be programmed to adjust the regulator device 50 and the flow rate of shredded material to compensate for any change in the path of the machine, for example when moving along a curved path or turning round corners. The flow rate can thus be adjusted to compensate for a change in the density of distribution caused by a change in the path and to provide a uniform distribution of the shredded materials on the ground.

One or more of the sensor signals described above can be used to provide fully automatic control of the distributor machine, without requiring manual control by the operator. The only input required from the operator is to indicate the type of fibrous material to be shredded. The control unit 72 then determines from the signals received from the sensors the appropriate settings for the various operational parameters including, for example, the rotational speeds of the shredder drum 10 and the fan 60, the conveying speed of the conveyor 30 and the opening position of the regulator device 50.

Further modifications of the distributor machine are of course possible. For example, for safety reasons the control unit 72 may be programmed to lock the loading door 20 in a closed position unless the regulator device 50 is fully closed, in order to prevent access to the feed gap.

## Claims

1. A distributor machine for distributing fibrous materials, comprising a chamber (6) configured to receive fibrous materials, a rotating shredder device (10) having a plurality of cutter elements (40) configured to shred the fibrous materials, a barrier device (44) comprising a plurality of barrier elements (46a, 46b) configured to cooperate with the cutter elements (40) to shred the fibrous materials and to hold back or recirculate unshredded materials, a blower device (8) configured to receive shredded materials from the shredder device (10) through a feed gap (47) and distribute the shredded materials through a distributor device (64), a regulator device (50) comprising a plurality of regulator elements (52) that are positioned between the cutter elements (40) and are moveable relative to the shredder device (10) to regulate the feeding of shredded materials through the feed gap (47), wherein said regulator device (50) is moveable between a closed position in which the feed gap is blocked, an open position in which the feed gap is fully open, and a plurality of intermediate positions in which the feed gap is partially open; **characterised by** at least one sensor (78,80,82,84,86,88,90) configured to sense an operating parameter of the distributor machine and a control device (72) configured to control operation of the machine according to the sensed operating parameter, wherein the control device (72) is configured to control the position of the regulator device (44) so as to regulate the feeding of shredded materials through the feed gap (47).

2. A distributor machine according to claim 1, including a conveyor (30) that delivers fibrous material from the chamber (6) to the shredder device (10), wherein the control unit (72) is configured to control the speed of the conveyor (30) to control the rate at which fibrous material is delivered to the shredder device (10).

3. A distributor machine according to any one of the preceding claims, wherein said at least one operating parameter includes the flow rate of shredded materials through the distributor device.

4. A distributor machine according to any one of the preceding claims, wherein said at least one operating parameter includes the speed, torque or power consumption of the blower device (8).

5. A distributor machine according to any one of the preceding claims, wherein said at least one operating parameter includes the speed, torque or power consumption of the shredder device (10).

6. A distributor machine according to any one of the preceding claims, wherein said at least one operating parameter includes the quantity of fibrous materials in the chamber (6).

7. A distributor machine according to any one of the preceding claims, wherein said at least one operating parameter includes the speed, torque or power consumption of a conveyor device within the chamber (6).

8. A distributor machine according to any one of the preceding claims, wherein said at least one operating parameter includes the speed or position of the distributor machine relative to the ground, or the travel path of the distributor machine over the ground.

9. A distributor machine according to any one of the preceding claims, wherein the control device (72) is configured to sense an operational condition in which there is a risk of blockage, and to adjust the position of the regulator device (44) so as to reduce the risk of blockage.

10. A distributor machine according to any one of the preceding claims, wherein the control device (72) is configured to maintain a constant flow rate of shredded materials through the distributor device.

11. A distributor machine according to any one of the preceding claims, wherein the control device (72) is configured to maintain a uniform distribution of shredded materials.

12. A method of operating a distributor machine according to any one of claims 1 to 11, including driving the shredder device (10) and the blower device (8) to initiate operation thereof, moving the regulator device (44) to the open position to allow feeding of shredded material to the blower device, sensing at least one operating parameter of the distributor machine and controlling operation of the machine according to the at least one sensed operating parameter, wherein controlling operation of the machine includes controlling the position of the regulator device (44) so as to regulate the feeding of shredded materials through the feed gap (47).

13. A method according to claim 12, wherein the distributor machine includes a conveyor (30) that delivers fibrous material from the chamber (6) to the shredder device (10), the method including controlling the speed of the conveyor (30) to control the rate at which fibrous material is delivered to the shredder device (10).

14. A method according to any one of claims 12 to 13, including sensing the flow rate of shredded materials through the distributor device.

15. A method according to any one of claims 12 to 14, including sensing the speed, torque or power consumption of the blower device (8).

16. A method according to any one of claims 12 to 15, including sensing the speed, torque or power consumption of the shredder device (10).

17. A method according to any one of claims 12 to 16, including sensing the quantity of fibrous materials in the chamber (6).

18. A method according to any one of claims 12 to 17, including sensing the speed, torque or power consumption of a conveyor device (30) within the chamber.

19. A method according to any one of claims 12 to 18, including sensing the speed or position of the distributor machine relative to the ground, or the travel path of the machine over the ground.

20. A method according to any one of claims 12 to 19, including sensing an operational condition in which there is a risk of blockage, and adjusting the position of the regulator device (44) so as to reduce the risk of blockage.

21. A method according to any one of claims 12 to 20, further comprising loading the fibrous materials into the distributor machine.

## Patentansprüche

1. Verteilermaschine zum Verteilen von faserigen Materialien, umfassend eine Kammer (6), die zur Aufnahme faseriger Materialien gestaltet ist, eine rotierende Häckslervorrichtung (10), die eine Vielzahl von Messerelementen (40) hat, die zum Häckseln der faserigen Materialien gestaltet sind, eine Schrankenvorrichtung (44), die eine Vielzahl von Schrankenelementen (46a, 46b) hat, die zum Zusammenwirken mit den Messerelementen (40) gestaltet sind, um die faserigen Materialien zu häckseln und ungehäckselte Materialien zurückzuhalten oder umzuwälzen, eine Gebläsevorrichtung (8), die zum Erhalten von gehäckselten Materialien aus der Häckslervorrichtung (10) durch einen Zuführspalt (47) und zum Verteilen der gehäckselten Materialien durch eine Verteilervorrichtung (64) gestaltet ist, eine Reglervorrichtung (50), die eine Vielzahl von Reglerelementen (52) aufweist, die zwischen den Messerelementen (40) positioniert sind und relativ zur Häckslervorrichtung (10) beweglich sind, um die Zuführung von gehäckselten Materialien durch den Zuführspalt (47) zu regulieren, wobei die genannte Reglervorrichtung (50) zwischen einer geschlossenen Stellung, in welcher der Zuführspalt blockiert ist, einer offenen Stellung, in welcher der Zuführspalt ganz offen ist, und einer Vielzahl von Zwischenstellungen, in welchen der Zuführspalt teilweise offen ist, beweglich ist; **gekennzeichnet durch** wenigstens einen Sensor (78, 80, 82, 84, 86, 88, 90), der zum Erfassen eines Betriebsparameters der Verteilermaschine konfiguriert ist, und eine Steuervorrichtung (72), die zum Steuern des Betriebs der Maschine gemäß dem erfassten Betriebsparameter konfiguriert ist, wobei die Steuervorrichtung (72) zum Steuern der Stellung der Reglervorrichtung (44) konfiguriert ist, um die Zuführung der gehäckselten Materialien **durch** den Zuführspalt (47) zu regulieren.

2. Verteilermaschine nach Anspruch 1, die einen Förderer (30) beinhaltet, der faseriges Material aus der Kammer (6) zur Häckslervorrichtung (10) fördert, wobei die Steuereinheit (72) zum Regeln der Geschwindigkeit des Förderers (30) konfiguriert ist, um das Tempo zu regeln, mit der faseriges Material zur Häckslervorrichtung (10) gefördert wird.

3. Verteilermaschine nach einem der vorhergehenden Ansprüche, wobei der genannte wenigstens eine Betriebsparameter den Durchsatz von gehäckselten Materialien durch die Verteilervorrichtung beinhaltet.

4. Verteilermaschine nach einem der vorhergehenden Ansprüche, wobei der genannte wenigstens eine Betriebsparameter die Geschwindigkeit, das Drehmoment oder den Energieverbrauch der Gebläsevorrichtung (8) beinhaltet.

5. Verteilermaschine nach einem der vorhergehenden Ansprüche, wobei der genannte wenigstens eine Betriebsparameter die Geschwindigkeit, das Drehmoment oder den Energieverbrauch der Häckslervorrichtung (10) beinhaltet.

6. Verteilermaschine nach einem der vorhergehenden Ansprüche, wobei der genannte wenigstens eine Betriebsparameter die Menge faseriger Materialien in der Kammer (6) beinhaltet.

7. Verteilermaschine nach einem der vorhergehenden Ansprüche, wobei der genannte wenigstens eine Betriebsparameter die Geschwindigkeit, das Drehmoment oder den Energieverbrauch einer Fördervorrichtung in der Kammer (6) beinhaltet.

8. Verteilermaschine nach einem der vorhergehenden Ansprüche, wobei der genannte wenigstens eine Betriebsparameter die Geschwindigkeit oder Stellung der Verteilervorrichtung relativ zum Boden oder den Fahrweg der Verteilermaschine über den Boden beinhaltet.

9. Verteilermaschine nach einem der vorhergehenden Ansprüche, wobei die Steuervorrichtung (72) zum Erfassen einer Betriebsbedingung, bei der ein Verstopfungsrisiko besteht, und zum Einstellen der Stellung der Reglervorrichtung (44), um das Verstopfungsrisiko zu verringern, konfiguriert ist.

10. Verteilervorrichtung nach einem der vorhergehenden Ansprüche, wobei die Steuervorrichtung (72) konfiguriert ist, um einen konstanten Durchsatz von gehäckselten Materialien durch die Verteilervorrichtung aufrecht zu erhalten.

11. Verteilervorrichtung nach einem der vorhergehenden Ansprüche, wobei die Steuervorrichtung (72) konfiguriert ist, um die gleichmäßige Verteilung von gehäckselten Materialien aufrecht zu erhalten.

12. Verfahren zum Betreiben einer Verteilermaschine nach einem der Ansprüche 1 bis 11, das Folgendes beinhaltet: Antreiben der Häckslervorrichtung (10) und der Gebläsevorrichtung (8) zum Einleiten ihres Betriebs, Bewegen der Reglervorrichtung (44) auf die offene Stellung, um die Zuführung von gehäckseltem Material zur Gebläsevorrichtung zuzulassen, Erfassen von wenigstens einem Betriebsparameter der Verteilervorrichtung und Steuern des Betriebs der Maschine gemäß dem wenigstens einen erfassten Betriebsparameter, wobei das Steuern des Betriebs der Maschine das Steuern der Stellung der Reglervorrichtung (44) beinhaltet, um das Zuführen von gehäckselten Materialien durch den Zuführspalt (47) zu regulieren.

13. Verfahren nach Anspruch 12, wobei die Verteilermaschine einen Förderer (30) beinhaltet, der faseriges Material aus der Kammer (6) zur Häckslervorrichtung (10) fördert, wobei das Verfahren das Regeln der Geschwindigkeit des Förderers (30) beinhaltet, um das Tempo zu regeln, mit der faseriges Material zur Häckslervorrichtung (10) gefördert wird.

14. Verfahren nach einem der Ansprüche 12 bis 13, welches das Erfassen des Durchsatzes gehäckselter Materialien durch die Verteilervorrichtung beinhaltet.

15. Verfahren nach einem der Ansprüche 12 bis 14, welches das Erfassen der Geschwindigkeit, des Drehmoments oder des Energieverbrauchs der Gebläsevorrichtung (8) beinhaltet.

16. Verfahren nach einem der Ansprüche 12 bis 15, welches das Erfassen der Geschwindigkeit, des Drehmoments oder des Energieverbrauchs der Häckslervorrichtung (10) beinhaltet.

17. Verfahren nach einem der Ansprüche 12 bis 16, welches das Erfassen der Menge faseriger Materialien in der Kammer (6) beinhaltet.

18. Verfahren nach einem der Ansprüche 12 bis 17, welches das Erfassen der Geschwindigkeit, des Drehmoments oder des Energieverbrauchs einer Fördervorrichtung (30) in der Kammer beinhaltet.

19. Verfahren nach einem der Ansprüche 12 bis 18, welches das Erfassen der Geschwindigkeit oder Stellung der Verteilervorrichtung relativ zum Boden oder den Fahrweg der Verteilermaschine über den Boden beinhaltet.

20. Verfahren nach einem der Ansprüche 12 bis 19, welches das Erfassen einer Betriebsbedingung, bei der ein Verstopfungsrisiko besteht, und das Einstellen der Stellung der Reglervorrichtung (44), um das Verstopfungsrisiko zu verringern, beinhaltet.

21. Verfahren nach einem der Ansprüche 12 bis 20, das ferner das Laden der faserigen Materialien in die Verteilermaschine beinhaltet.

## Revendications

1. Distributeur servant à distribuer des matières fibreuses, comprenant une chambre (6) pouvant recevoir des matières fibreuses, un déchiqueteur rotatif (10) ayant une pluralité d'éléments de coupe (40) pouvant déchiqueter les matières fibreuses, une barrière (44) comprenant une pluralité d'éléments de barrière (46a, 46b) pouvant coopérer avec les éléments de coupe (40) pour déchiqueter les matières fibreuses et retenir ou recycler les matières déchiquetées, une soufflante (8) pouvant recevoir les matières non déchiquetées en provenance du déchiqueteur (10) par l'intermédiaire d'une fente d'alimentation (47) et distribuer les matières déchiquetées par l'intermédiaire d'un dispositif de distribution (64), un régulateur (50) comprenant une pluralité d'éléments régulateurs (52) positionnés entre les éléments de coupe (40) et pouvant se déplacer par rapport au déchiqueteur (10) afin de réguler l'alimentation des matières déchiquetées par l'intermédiaire de la fente d'alimentation (47), dans lequel ledit régulateur (50) peut se déplacer entre une position fermée dans laquelle la fente d'alimentation est bloquée, une position ouverte dans laquelle la fente d'alimentation est complètement ouverte, et une pluralité de positions intermédiaires dans lesquelles la fente d'alimentation est partiellement ouverte ; **caractérisée par** au moins un capteur (78, 80, 82, 84, 86, 88, 90) pouvant détecter un paramètre de fonctionnement du distributeur et un dispositif de commande (72) pouvant commander le fonctionnement de la machine conformément au paramètre de fonctionnement détecté, dans lequel le dispositif de commande (72) peut contrôler la position du régulateur (44) afin de réguler l'alimentation des matières déchiquetées par l'intermédiaire de la fente d'alimentation (47).

2. Distributeur selon la revendication 1, comprenant un transporteur (30) amenant des matières fibreuses de la chambre (6) au déchiqueteur (10), dans laquelle le dispositif de commande (72) peut contrôler la vitesse du transporteur (30) afin de contrôler la vitesse à laquelle les matières fibreuses sont amenées au déchiqueteur (10).

3. Distributeur selon l'une quelconque des revendications précédentes, dans laquelle ledit au moins un paramètre de fonctionnement comprend le débit de matières fibreuses traversant le dispositif de distribution.

4. Distributeur selon l'une quelconque des revendications précédentes, dans laquelle ledit au moins un paramètre de fonctionnement comprend la vitesse, le couple ou la consommation d'énergie de la soufflante (8).

5. Distributeur selon l'une quelconque des revendications précédentes, dans laquelle ledit au moins un paramètre de fonctionnement comprend la vitesse, le couple ou la consommation d'énergie du déchiqueteur (10).

6. Distributeur selon l'une quelconque des revendications précédentes, dans laquelle ledit au moins un paramètre de fonctionnement comprend la quantité de matières fibreuses dans la chambre (6).

7. Distributeur selon l'une quelconque des revendications précédentes, dans laquelle ledit au moins un paramètre de fonctionnement comprend la vitesse, le couple ou la consommation d'énergie d'un transporteur dans la chambre (6).

8. Distributeur selon l'une quelconque des revendications précédentes, dans laquelle ledit au moins un paramètre de fonctionnement comprend la vitesse ou la position du distributeur par rapport au sol, ou le trajet du dispositif de distribution sur le sol.

9. Distributeur selon l'une quelconque des revendications précédentes, dans laquelle le dispositif de commande (72) peut détecter une condition de fonctionnement présentant un risque de blocage, et ajuster la position du régulateur (44) pour réduire ce risque de blocage.

10. Distributeur selon l'une quelconque des revendications précédentes, dans laquelle le dispositif de commande (72) peut maintenir un débit constant de matières déchiquetées traversant le dispositif de distribution.

11. Distributeur selon l'une quelconque des revendications précédentes, dans laquelle le dispositif de commande (72) peut maintenir une distribution uniforme des matières déchiquetées.

12. Mode de fonctionnement d'un distributeur selon l'une quelconque des revendications 1 à 11, comprenant la commande du déchiqueteur (10) et de la soufflante (8) pour lancer le fonctionnement de celui-ci, le déplacement du régulateur (44) vers la position ouverte pour permettre l'alimentation de matières déchiquetées vers la soufflante, la détection d'au moins un paramètre de fonctionnement du distributeur et la commande du fonctionnement de la machine conformément audit au moins un paramètre de fonctionnement détecté, dans lequel la commande du fonctionnement de la machine comprend le contrôle de la position du régulateur (44) afin de réguler l'alimentation des matières déchiquetées par l'intermédiaire de la fente d'alimentation (47).

13. Mode selon la revendication 12, dans lequel le distributeur comprend un transporteur (30) amenant des matières fibreuses de la chambre (6) au déchiqueteur (10), le mode comprenant le contrôle de la vitesse du transporteur (30) afin de contrôler la vitesse à laquelle les matières fibreuses sont amenées au déchiqueteur (10).

14. Mode selon l'une quelconque des revendications 12 à 13, comprenant la détection du débit de matières fibreuses traversant le dispositif de distribution.

15. Mode selon l'une quelconque des revendications 12 à 14, comprenant la détection de la vitesse, du couple ou de la consommation d'énergie de la soufflante (8).

16. Mode selon l'une quelconque des revendications 12 à 15, comprenant la détection de la vitesse, du couple ou de la consommation d'énergie du déchiqueteur (10).

17. Mode selon l'une quelconque des revendications 12 à 16, comprenant la détection de la quantité de matières fibreuses dans la chambre (6).

18. Mode selon l'une quelconque des revendications 12 à 17, comprenant la détection de la vitesse, du couple ou de la consommation d'énergie d'un transporteur (30) dans la chambre.

19. Mode selon l'une quelconque des revendications 12 à 18, comprenant la détection de la vitesse ou de la position du distributeur par rapport au sol, ou du trajet du dispositif de distribution sur le sol.

20. Mode selon l'une quelconque des revendications 12 à 19, comprenant la détection d'une condition de fonctionnement présentant un risque de blocage, et l'ajustement de la position du régulateur (44) pour réduire ce risque de blocage.

21. Mode selon l'une quelconque des revendications 12 à 20, comprenant en outre le chargement des matières fibreuses dans le distributeur.
